# FASCICULE DE BREVET EUROPEEN

(11) **EP 3 083 412 B1**
(45) Date de publication et mention de la délivrance du brevet: **20.02.2019**
(21) Numéro de dépôt: 14830841.4
(22) Date de dépôt: 19.12.2014
(51) Int. Cl.: B65B 11/54, B65B 55/08, C12N 1/04, B65B 51/10, B32B 27/08, B32B 27/36, B32B 3/26, B65B 9/02

(54) **UTILISATION DE FILM POLYMERE POUR L'EMBALLAGE DE MILIEU DE CULTURE**
NÜTZUNG EINER POLYMERFOLIE ZUR VERPACKUNG EINES NÄHRBODENS
USE OF A POLYMERIC FILM FOR THE PACKAGING OF A CULTURE MEDIUM

(30) Priorité: 20.12.2013 FR 1363169
(43) Date de publication de la demande: 26.10.2016
(60) Demande divisionnaire: 18189347.0
(73) Titulaire: bioMérieux, 69280 Marcy-L'Etoile (FR)
(72) Inventeur: TETART, Bruno, F-69290 Craponne (FR); SIMON, Nathalie, F-69290 Grézieu la Varenne (FR)
(86) Numéro de dépôt international: PCT/FR2014/053466
(87) Numéro de publication internationale: WO 2015/092328

(56) Documents cités:
- EP-A1- 0 516 094
- EP-A2- 0 087 031
- WO-A1-2006/118034
- FR-A1- 2 913 021

## Description

De nombreux films polymères, aptes à être utilisés pour l'emballage des produits sont présents sur le marché. On peut citer en particulier les films à usage alimentaire tels que les films en polyamide (PA), en polyéthylène téréphtalate (PET) ou en polychlorure de vynile (PVC).

Lorsque l'on s'intéresse plus particulièrement au domaine du diagnostic in vitro, qui est le domaine d'activité de la demanderesse, et en particulier aux films utilisés pour l'ensachage des milieux de culture, on constate que les matériaux habituellement utilisés sont les matériaux présentant une propriété barrière faible caractérisée par une perméabilité élevée à la vapeur d'eau (>120g/m² x 24 heures). Un tel matériau est par exemple la cellophane. Ce matériau a pour avantage de permettre à l'eau contenue dans les milieux de culture gélosés prêts à l'emploi de s'évaporer et de traverser le film. Ceci empêche alors une condensation trop importante à l'intérieur du sac constitué du film en cellophane. Par contre, l'inconvénient principal est que, la vapeur d'eau traversant le film, le taux d'humidité à l'intérieur est très bas, entraînant un dessèchement plus important et donc prématuré du milieu de culture. La durée de conservation du produit s'en trouve donc affectée.

D'autres matériaux également utilisés pour l'ensachage des milieux de culture présentent, quant à eux, une propriété barrière élevée caractérisée par une perméabilité faible à la vapeur d'eau (<5g/m² x 24 heures). Cette faible perméabilité à la vapeur d'eau ne permet pas d'évacuer la condensation importante qui se forme dans les boîtes de milieux gélosés prêts à l'emploi, notamment après que les milieux ont été coulés. Il s'ensuit que cette eau demeure dans le sac jusqu'à l'ouverture de celui-ci par l'utilisateur final, générant éclaboussures et souillures ; ce qui est rédhibitoire. De tels produits sont par exemple les polyoléfines, tels que les polypropylènes (PP) ou polyéthylène (PE). Les polyoléfines sont largement utilisés comme matériau d'emballage. Toutefois, les procédés d'obtention de tels matériaux font que ces derniers présentent une très faible perméabilité à la vapeur d'eau. Par ailleurs, on trouve également des matériaux comportant deux films complexés, tels que des films PA + PE, destinés à accentuer leur propriété barrière à la vapeur d'eau. Ainsi des matériaux de ce type présentent des valeurs de perméabilité à la vapeur d'eau, inférieures à une dizaine de grammes/m² x 24 heures. Des solutions connues pour limiter la quantité d'eau demeurant dans le sac jusqu'à l'ouverture consiste en l'utilisation de dessicants tel que des gels de silice sous forme de sachets. Une telle méthode oblige cependant à ajouter une quantité de dessicant dans chacun des sac, entraînant ainsi des surcoûts de fabrication et une quantité de déchets importante.

Enfin, comme décrit dans la demande de brevet FR 2 913 021, d'autres matériaux également utilisés pour l'ensachage des milieux de culture comportent une monocouche uniquement constitué de PA non orienté, de type "cast" et d'autre part, une quantité de PVC et/ou poly chlorure de vinylidène (PVDC) utilisé comme constituant de base d'une couche d'enduit de scellage du film. L'intérêt de cette technique est de pouvoir moduler la perméabilité à la vapeur d'eau, en faisant varier la quantité d'enduit déposé sur le film PA. Des matériaux de ce type présentent une perméabilité à la vapeur d'eau comprise entre 35g/m<2>x24 heures et 1 10g/m<2>x24 heures. Cependant les procédés de réalisation de ces films ne permettent pas de maîtriser la quantité d'enduit déposé sur la surface du film. De ce fait, le film obtenu présente une gamme de perméabilité à la vapeur d'eau très variable pour un même lot de fabrication. Par conséquent, l'utilisation de ce type de film pour la réalisation d'emballages de milieu de culture ne permet pas de garantir une durée de péremption précise.

La demande de brevet européen EP 0 087 031 décrit un film pour l'ensachage de boites de Pétri en polyéthylène téréphtalate.

Il s'ensuit que les sociétés productrices de milieux de culture gélosés sont toujours dans l'attente d'un emballage apte à conserver lesdits milieux de culture, dans des conditions optimales, à savoir dans un environnement suffisamment riche en vapeur d'eau pour éviter leur dessèchement prématuré, mais également suffisamment pauvre pour éviter une condensation trop importante dans le sac, notamment à température ambiante, et ce de manière prédictible et peu variable dans le temps. De tels films devraient permettre de limiter la cinétique de perte de poids de la gélose ainsi que le risque de déshydratation des milieux de culture sans dégrader le niveau d'exsudation de l'emballage. Ces propriétés doivent par ailleurs être combinées avec un rendu visuel conforme aux attentes des clients, notamment en terme de transparence ainsi qu'une résistance à l'étirement satisfaisante.

Il est du mérite des inventeurs d'avoir mis en évidence qu'il était possible d'utiliser à des fins d'emballage de milieux de culture de microorganismes, des films comprenant au moins une couche de polyéthylène téréphtalate et au moins une couche thermoscellante et présentant une perméabilité à la vapeur d'eau moyenne comprise entre 10,0 g/m<2>x24 heures et 80,0 g/m<2>x24 heures. L'utilisation de ces matériaux particuliers permettant une meilleure maîtrise de la durée de conservation et ce quelle que soit les conditions de stockage et de transport. Le stockage et transport à température ambiante étant possible.

Ainsi, un premier objectif de la présente invention est de proposer une utilisation d'un film possédant des propriétés physiques, particulièrement en terme de capacité barrière à la vapeur d'eau, aptes à permettre une durée de conservation améliorée et moins variable des milieux de cultures de microorganismes sous une atmosphère à taux d'humidité contrôlé.

Un deuxième objectif de la présente invention est de proposer une utilisation d'un film permettant de réduire la quantité de gélose présente dans le milieu de culture de microorganismes.

Un troisième objectif de la présente invention est de proposer une utilisation d'un film souple et de faible épaisseur et présentant par ailleurs un cout de revient limité.

Un quatrième objectif de la présente invention est de proposer une utilisation d'un film facilement scellable pour la réalisation d'un sachet d'emballage pour milieux de culture de microorganismes.

Un cinquième objectif de la présente invention est de proposer une utilisation d'un film apte à répondre aux standards en terme de rendu esthétique, particulièrement en terme de transparence et de toucher.

Un sixième objectif de la présente invention est de proposer une utilisation d'un film apte à répondre aux standards en terme de résistance à la rupture et de déformation élastique.

Un septième objectif de la présente invention est de proposer une utilisation d'un film possédant des propriétés physiques, particulièrement en terme de capacité barrière à la vapeur d'eau, aptes à permettre une durée de conservation améliorée quelles que soient les conditions de température.

Un huitième objectif de la présente invention est de proposer une utilisation d'un film possédant des propriétés physiques, particulièrement en terme de capacité barrière à la vapeur d'eau, aptes à permettre une diminution de la cinétique de perte de poids gélose et à aptes à permettre une meilleure stabilité de la cinétique de perte de poids gélose dans le temps, et ce quelles que soient les conditions de température.

Un autre objectif de la présente invention est de proposer une utilisation d'un film permettant la réalisation d'un emballage réutilisable et/ou refermable.

Ces objectifs parmi d'autres, sont atteints par la présente invention telle que présentée dans les revendications attenantes. Ledit film présentant préférentiellement une perméabilité à la vapeur d'eau moyenne comprise entre 10,0 g/m²x24 heures et 60,0 g/m²x24 heures, plus préférentiellement entre 10,0 g/m²x24 heures et 30,0 g/m²x24 heures.

Par film polymère, on entend un matériau comprenant au moins une couche d'un matériau polymère, sans limitation de taille, tel que le Polyéthylène téréphtalate. De tels films sont réalisés par extrusion ou coextrusion afin d'obtenir un film comprenant plusieurs couches, chacune ayant leur qualités propres.

Les différentes mesures de perméabilité à la vapeur d'eau des films polymères décrits dans la présente invention sont déterminées à 38°C et 90% d'humidité relative selon la norme NF ISO 2528 (09/2001).

Les différentes mesures de masse surfacique sont déterminées par la méthode UNE-EN ISO 536 .

On entend par milieu de culture, un milieu comprenant tous les constituants nécessaires à la survie et/ou à la croissance de microorganismes, déposé sur un support. En pratique, l'homme du métier choisira le milieu de culture en fonction des microorganismes cibles, selon des critères parfaitement connus et à la portée de cet homme de l'art. Un milieu de culture peut se présenter sous une forme déshydratée ou gélosée. Dans le cas de la forme gélosée, le milieu de culture est contenu dans une boîte de Petri. Les boîte de Petri sont généralement constituées d'un fond, dans lequel est coulé à chaud le milieu de culture gélosé, également appelé gélose et d'un couvercle. Les parties extérieures du fond et du couvercle coopérant afin de pouvoir empiler plusieurs boîtes de Petri. Généralement, des piles de dix boîtes sont réalisées pour le conditionnement et le transport.

On entend par couche thermoscellante un couche polymère susceptible de solidariser au moins partiellement, sous l'effet de la chaleur, deux bord superposés sur au moins un côté d'un film. De façon préférentielle, l'étape de solidarisation est effectuée par thermoscellage à une température comprise entre 100 et 170 °C. Des exemples de matériaux pouvant constituer une telle couche sont le Polyéthylène, le Polypropylène ou encore le Polychlorure de Vinyle.

Un avantage de l'utilisation d'un film présentant une couche de Polyéthylène téréphtalate et au moins une couche thermoscellante, tel que le polyéthylène, est d'obtenir un emballage pour milieu de culture réutilisable et/ou refermable, celui-ci étant non-étirable. Contrairement à l'utilisation de films étirables tel que des films en Polychlorure de vinyle, les emballages ainsi formés par thermoscellage peuvent continuer à contenir ou maintenir un ou plusieurs milieux de culture une fois ouverts. Un opérateur peut ainsi déplacer aisément l'emballage et son contenu sans risquer de faire tomber un ou plusieurs milieux de cultures. Les films étirables sont connus pour se déchirer à l'ouverture de l'emballage, empêchant ainsi toute manipulation ultérieure de celui-ci. De plus les milieux contenus par ce type d'emballage risquent de ne plus être maintenus convenablement en pile après ouverture.

Avantageusement le film utilisé selon l'invention est un film non-étirable. Plus avantageusement la couche thermoscellante du film est non-étirable afin de rendre le film utilisé selon l'invention non-étirable.

Préférentiellement, le film utilisé présente un allongement à la rupture inférieur à 250% et ce quelle que soit la direction de mesure (machine ou transverse). Plus préférentiellement, le film utilisé présente un allongement à la rupture inférieur à 125% et ce quelle que soit la direction de mesure (machine ou transverse), lui permettant d'être peu ductile.

Préférentiellement, le film utilisé présente une résistance à la rupture minimale de 40N/15mm (ASTM D-882) ce quelle que soit la direction de mesure (machine ou transverse). Plus préférentiellement, le film utilisé présente une résistance à la rupture minimale de 50N/15mm (ASTM D-882) et ce quelle que soit la direction de mesure (machine ou transverse), lui permettant d'être plus résistant.

Un autre avantage de l'utilisation de films selon l'invention est de pouvoir garantir une durée de péremption des milieux de cultures quel que soit le lot emballé. En effet, la perméabilité à la vapeur d'eau des films utilisés selon l'invention est très peu variable pour un même lot de fabrication. Ceci est notamment dû au fait qu'ils ne présentent pas de couche enduite et sont obtenus directement par extrusion ou complexage.

Une perméabilité à la vapeur d'eau moyenne comprise entre 10,0 g/m²x24 heures et 30,0 g/m²x24 heures permet de garantir une durée de conservation de milieux de culture particulièrement longue, notamment supérieure à 6 mois, en fonction des conditions de stockage et ce tout en conservant la qualité du ou des milieux de culture emballé(s) et permettre leur utilisation de façon conforme.

Selon une caractéristique préférentielle, le film utilisé pour emballer au moins un milieu de culture de microorganismes est transparent. Cette transparence permet notamment d'identifier par tout moyen le milieu de culture emballé sans l'ouvrir. Cette transparence permet notamment la reconnaissance de code à barres présents sur le support du milieu de culture par un lecteur de code à barre ou tout autre moyen d'imagerie. Un autre intérêt est également de pouvoir voir la bonne qualité du milieu du culture en recherchant d'éventuels défauts d'aspects et/ou contaminations du milieu de culture avant ouverture de l'emballage.

Avantageusement, le film utilisé pour emballer au moins un milieu de culture de microorganismes comprend une seconde couche de Polyéthylène téréphtalate. Cette deuxième couche permet de sceller le matériau afin de pouvoir fabriquer un sachet. Pour cela, les deux couches sont assemblées par une colle bi-composant (PU) base solvant (Polyuréthane). La deuxième couche est rendu scellable par une laque pour APET (polyethylene therephtalate amorphe) a base d'acide isophtalique.

Alternativement d'autre colles permettant l'adhésion des deux couches de Polyéthylène téréphtalate, tel que des adhésifs à base acrylique, peuvent être utilisés. Préférentiellement, la colle est répartie à raison de quelques grammes par m², plus préférentiellement entre 2g/m² et 3g/m² de film.

Selon une autre caractéristique préférentielle, le film utilisé pour emballer au moins un milieu de culture de microorganismes comprend au moins une couche microperforée.

Par microperforée, on entend tout moyen susceptible de modifier la perméabilité à la vapeur d'eau d'une couche polymère par la réalisation de perforations de tailles comprise entre 10µm et 50µm. Le nombre et l'espacement des perforations permet également de modifier la perméabilité d'une couche polymère à la vapeur d'eau, de façon controlée. De façon préférentielle, les microperforations sont réalisées par un laser. De façon plus préférentielle, une seule couche de polyéthylène téréphtalate est microperforée. De façon encore plus préférentielle et dans le cas où le film comprend deux couches de polyéthylène téréphtalate, ces deux couches sont microperforées.

Selon une autre caractéristique préférentielle, le film utilisé pour emballer au moins un milieu de culture de microorganismes présente une épaisseur comprise entre 20 et 80 µm, préférentiellement entre 30 et 50 µm, plus préférentiellement entre 20 et 40 µm. Une épaisseur comprise entre 20 et 80 µm permet de garantir une résistance à la déchirure et un aspect visuel acceptable, permettant à l'opérateur de visualiser facilement le type de milieu de culture emballé dans le sachet formé par le film. Une épaisseur comprise entre 30 et 50 µm, ou entre 20 et 40 µm permet de limiter le coût d'achat et l'utilisation de matière tout en garantissant un aspect visuel acceptable, la gamme d'épaisseur pouvant être adaptée à l'aspect du milieu de culture emballé et à la résistance à la déchirure recherchée.

Un autre objet de l'invention concerne l'utilisation d'un film polymère tel que décrit précédemment pour la réalisation d'un sachet destiné à l'emballage d'au moins un milieu de culture de microorganismes.

Un autre objet de l'invention concerne un procédé d'emballage tel que décrit dans les revendications attenantes.

Préférentiellement, le ou les films sont préalablement stérilisés. La méthode de stérilisation peut être une irradiation par rayonnements pris dans le groupe constitué par les rayons gamma et/ou béta.

Préférentiellement, l'étape de solidarisation est une étape de thermoscellage à une température comprise entre 100 et 170 °C.

Selon une autre caractéristique préférentielle, le procédé d'emballage selon l'invention comporte en outre les étapes additionnelles consistant à :
- placer le sachet ainsi obtenu à l'intérieur d'un deuxième sachet et
- sceller ledit deuxième sachet.

Selon une autre caractéristique préférentielle, le procédé d'emballage selon l'invention comporte en outre les étapes additionnelles consistant à :
- placer le deuxième sachet ainsi obtenu à l'intérieur d'un troisième sachet et
- sceller ledit troisième sachet.

Selon une autre caractéristique préférentielle, lesdits deuxième et/ou troisième sachets du procédé d'emballage selon l'invention sont constitués d'un matériau pris dans le groupe comprenant : la cellophane, les polyoléfines, les polyamides.

Selon une autre caractéristique préférentielle, lesdits deuxième et/ou troisième sachets du procédé d'emballage selon l'invention sont constitués d'un film comprenant au moins une couche de Polyéthylène téréphtalate et au moins une couche thermoscellante, tel que le polyéthylène, ledit film présentant une perméabilité à la vapeur d'eau moyenne comprise entre 10,0 g/m²x24 heures et 80,0 g/m²x24 heures, préférentiellement entre 10,0 g/m²x24 heures et 60,0 g/m²x24 heures, plus préférentiellement entre 10,0 g/m²x24 heures et 30,0 g/m²x24 heures.

Une autre forme de réalisation concerne l'utilisation d'un film tel que décrit précédemment pour emballer au moins un milieu de culture dans un isolateur ou dans une hotte à flux d'air laminaire. L'intérêt de l'utilisation d'un tel film dans ce type d'application est de pouvoir décontaminer l'extérieur d'un emballage formé par ledit film sans risquer d'endommager le ou les milieux de cultures présents dans l'emballage ou de détruire d'éventuels microorganismes présents sur le milieu de culture pour analyse. En effet, un tel film présente une étanchéité aux principaux gaz de décontamination utilisés dans des isolateurs tel que le péroxyde d'hydrogène (H₂O₂) ou l'acide peracétique (C₂H₄O₃).

Les buts et avantages de la présente invention seront mieux compris à la lumière des exemples nullement limitatifs qui suivent, en référence au dessin.
La figure 1 présente les mesures des poids des piles complètes de boites semaine par semaine pour les lots 1 à 4. Les piles des lots présentées sur cette figure sont stockées à une température comprise entre 2 et 8°C
La figure 2 présente les mesures des poids des piles complètes de boites semaine par semaine pour les lots 1 à 4. Les piles des lots présentées sur cette figure sont stockées à température ambiante.
La figure 3 présente les mesures des poids des piles complètes de boites semaine par semaine pour les lots 1 à 4. Les piles des lots présentées sur cette figure sont stockées à une température comprise entre 30 et 35°C
La figure 4 présente les mesures des poids des piles complètes de boites semaine par semaine pour les lots 5 à 8. Les piles des lots présentées sur cette figure sont stockées à une température comprise entre 2 et 8°C
La figure 5 présente les mesures des poids des piles complètes de boites semaine par semaine pour les lots 5 à 8. Les piles des lots présentées sur cette figure sont stockées à température ambiante.
La figure 6 présente les mesures des poids des piles complètes de boites semaine par semaine pour les lots 5 à 8. Les piles des lots présentées sur cette figure sont stockées à une température comprise entre 30 et 35°C

### Exemple 1:

Différents lots de boites de Petri sont constitués. Chacun des lots contient dix milieux de cultures gélosé de type GTS (gélose trypcase soja), fabriqués par la demanderesse et commercialisés sous la référence bioMérieux Count-Tact™ GTS.

Le premier lot, LOT 1, comprend trois piles de dix boites de Petri, chaque pile étant emballée dans un sachet formé à partir d'un film PET / PE appelé FILM A d'une épaisseur de 32µm. Ce film est composé d'une couche de Polyéthylène basse densité linaire transparente d'une épaisseur de 20 µm et d'une masse surfacique de 18,4 g/m² à +/- 12 %, d'une couche de colle (pleine face) de masse surfacique de 2,5 g/m² à +/- 0,6 g/m² et d'une couche de PET transparente d'une épaisseur de 12 µm et d'une masse surfacique de 16,8 g/m² à +/- 4 %.

Le premier sachet ainsi formé est ensuite emballé dans deux sachets successifs formés à partir d'un film cellophane.

Le second lot, LOT 2, comprend trois piles de dix boites de Petri, chaque pile étant emballée dans un sachet formé à partir d'un film comprenant deux couches PET / PET appelé FILM B d'une épaisseur de 27µm. Ce film est composé d'une première couche de PET d'une masse surfacique de 17 g/m2 à +/- 7% et d'une épaisseur de 12µm, d'une couche de colle (pleine face) d'une masse surfacique de 3g/m2 et d'une seconde couche de PET d'une masse surfacique de 20 g/m2 à +/- 7% et d'une épaisseur de 15µm. Les différentes propriétés mécaniques du film ainsi formé sont données dans le tableau 1 ci-dessous :

**Tableau 1**

| Paramètre (en langue anglaise) | Méthode utilisée pour la mesure du paramètre | Unité | Valeur nominale | Tolérance |
|---|---|---|---|---|
| Cohérence entre couche (bond strength) | ASTM F-904 | N/15mm | 2.50 | Minimum :2 |
| Allongement à la rupture/direction transverse (break at elongation/td) | ASTM D-882 | % | 60 | Minimum :40 |
| Allongement à la rupture / direction machine (break at elongation/md) | ASTM D-882 | % | 90 | Minimum :70 |
| Résistance au scellage à chaud | ASTM F-88 | N/15mm 180° 0,5" 0,5Kg | 4 | Minimum :3 |
| Résistance à la rupture / direction machine (tensile strength/md) | ASTM D-882 | N/1 5mm | 60 | Minimum :40 |
| Résistance à la rupture / direction transverse (tensile strength/td) | ASTM D-882 | N/15mm | 70 | Minimum :50 |

Le premier sachet ainsi formé est ensuite emballé dans deux sachets successifs formés à partir d'un film cellophane.

Le troisième lot, LOT 3, comprend trois piles de dix boites de Petri, chaque pile étant emballée dans un sachet formé à partir d'un film polyamide d'une épaisseur de 40µm et d'une perméabilité à la vapeur d'eau d'environ 55g/m²x24 hr, de référence FILM C. Le premier sachet ainsi formé est ensuite emballé dans deux sachets successifs formés à partir d'un film cellophane. Ce type d'emballage est utilisé classiquement.

Le quatrième lot, LOT 4, comprend trois piles de dix boites de Petri, chaque pile étant emballée successivement dans trois sachets formés à partir d'un film polyamide d'une épaisseur de 40µm et d'une perméabilité à la vapeur d'eau d'environ 55g/m²x24 hr, également de référence FILM C. Ce type d'emballage constitue un second état de l'art.

Les coefficients de transmission de la vapeur d'eau des films A et B sont déterminés par cinq mesures selon la norme précitée. Les résultats sont indiqués dans le tableau 2 suivant.

**Tableau 2**

| Coefficient de transmission de la vapeur d'eau (g/m²,24h) | | | | | | | |
|---|---|---|---|---|---|---|---|
| Référence | Resultats | | | | | Moyenne | Ecart-type |
| FILM A : PET / PE | 17.1 | 16.6 | 6.6 | 17.1 | 17.6 | 17.0 | 0.4 |
| FILM B : PET / PET | 20.2 | 21.3 | 20.5 | 20.7 | 20.6 | 20.7 | 0.4 |

Les films de cellophane utilisés pour former les deuxième et troisième sachets des trois premiers lots n'ont pas d'influence sur la perméabilité de l'ensemble formé par les trois sachets. En effet, leur perméabilité à la vapeur d'eau est d'environ 600g/m²x24 hr.

Chacune des trois piles des quatre lots ainsi formés est ensuite stockée durant 5 semaines selon plusieurs conditions de température. Une première pile de chaque lot est ainsi stockée à une température comprise entre 2 et 8°C. Une seconde pile de chaque lot est également stockée à température ambiante. Un troisième pile de chaque lot est enfin stockée à une température comprise entre 30 et 35°C.

Le poids de la première et de la dernière boite de chacune des piles de chaque lot est mesuré toute les semaines afin de déterminer la cinétique de perte de poids de la gélose en fonction des conditions de stockage et d'emballage. Le poids total de chaque pile de chaque lot est également mesuré toute les semaines. Le suivi du poids de la gélose est un indicateur de la quantité d'eau perdue par la gélose.

Les résultats de ces mesures sont donnés dans les tableaux suivant et en relation avec les figures.

Le tableau 3 présente le suivi du poids de gélose des boites 1 et 10 de chacun des lots, mesuré semaine par semaine pour les piles stockées à une température comprise entre 2 et 8°C

**Tableau 3**

| TEMPERATURE 2-8°C | | | | | | |
|---|---|---|---|---|---|---|
| | | Semaine 1 | Semaine 2 | Semaine 3 | Semaine 4 | Semaine 5 |
| LOTI | Boite 1 | 16,69 | 16,81 | 16,79 | 16,82 | 16,79 |
| LOT 2 | Boite 1 | 16,61 | 16,77 | 16,82 | 16,75 | 17,24 |
| LOT 3 | Boite 1 | 16,39 | 16,29 | 16,29 | 16,3 | 16,33 |
| LOT 4 | Boite 1 | 16,13 | 16,12 | 16,35 | 15,9 | 16,3 |
| LOTI | Boite 10 | 16,6 | 16,82 | 16,73 | 16,75 | 16,55 |
| LOT 2 | Boite 10 | 16,54 | 16,74 | 16,69 | 16,73 | 17,21 |
| LOT 3 | Boite 10 | 16,27 | 16,33 | 16,17 | 16,37 | 16,25 |
| LOT 4 | Boite 10 | 16,21 | 16,22 | 16,36 | 15,87 | 16,1 |

Le tableau 4 présente le suivi du poids de gélose des boites 1 et 10 de chacun des lots, mesuré semaine par semaine pour les piles stockées à température ambiante

**Tableau 4**

| TEMPERATURE AMBIANTE | | | | | | |
|---|---|---|---|---|---|---|
| | | Semaine 1 | Semaine 2 | Semaine 3 | Semaine 4 | Semaine 5 |
| LOT 1 | Boite 1 | 16,86 | 16,53 | 16,79 | 16,53 | 16,72 |
| LOT 2 | Boite 1 | 17,08 | 16,68 | 16,48 | 16,31 | 16,68 |
| LOT 3 | Boite 1 | 16,13 | 15,79 | 15,31 | 15,5 | 15,07 |
| LOT 4 | Boite 1 | 16,18 | 15,99 | 16,17 | 15,91 | 15,67 |
| LOT 1 | Boite 10 | 16,74 | 16,35 | 16,6 | 16,31 | 16,71 |
| LOT 2 | Boite 10 | 17,07 | 16,75 | 16,54 | 16,27 | 16,6 |
| LOT 3 | Boite 10 | 16,3 | 16 | 15,35 | 15,68 | 15,45 |
| LOT 4 | Boite 10 | 16,24 | 16,05 | 16,19 | 15,87 | 15,91 |

Le tableau 5 présente le suivi du poids de gélose des boites 1 et 10 de chacun des lots, mesuré semaine par semaine pour les piles stockées à une température comprise entre 30 et 35°C.

**Tableau 5**

| TEMPERATURE 30-35°C | | | | | | |
|---|---|---|---|---|---|---|
| | | Semaine 1 | Semaine 2 | Semaine 3 | Semaine 4 | Semaine 5 |
| LOT 1 | Boite 1 | 16,26 | 16,27 | 15,88 | 15,6 | 15,32 |
| LOT 2 | Boite 1 | 16,21 | 16,17 | 15,94 | 15,8 | 15,09 |
| LOT 3 | Boite 1 | 15,26 | 15,06 | 14,05 | 13,1 | 12,5 |
| LOT 4 | Boite 1 | 15,48 | 15,62 | 14,89 | 14,81 | 14,8 |
| LOT 1 | Boite 10 | 16,39 | 16,34 | 16,29 | 15,91 | 15,47 |
| LOT 2 | Boite 10 | 16,55 | 16,33 | 15,76 | 15,53 | 15,24 |
| LOT 3 | Boite 10 | 15,35 | 15,25 | 14,3 | 13,65 | 13,16 |
| LOT 4 | Boite 10 | 15,68 | 15,89 | 15,43 | 15,14 | 15,17 |

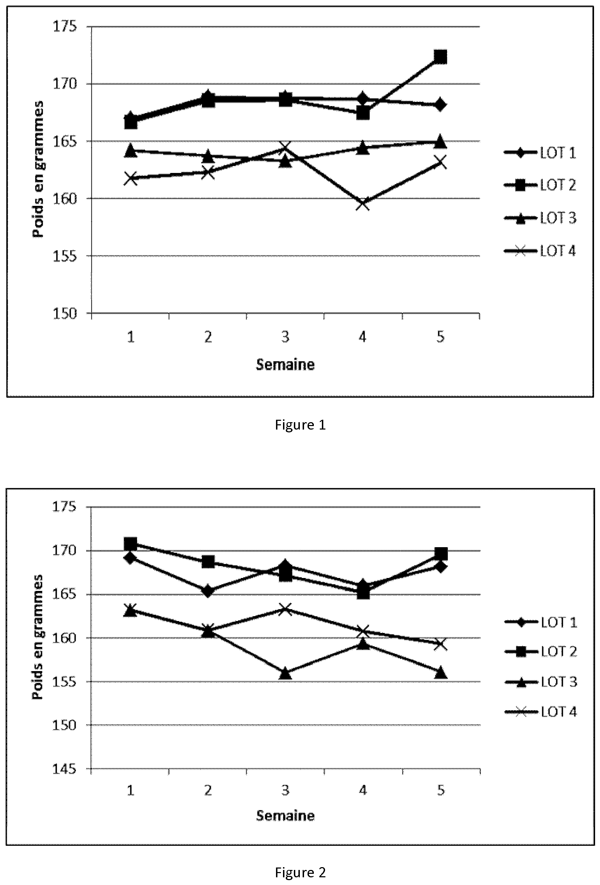

La figure 1 présente les mesures des poids des piles complètes de boites semaine par semaine pour les lots 1 à 4. Les piles des lots présentées sur cette figure sont stockées à une température comprise entre 2 et 8°C

La figure 2 présente les mesures des poids des piles complètes de boites semaine par semaine pour les lots 1 à 4. Les piles des lots présentées sur cette figure sont stockées à température ambiante.

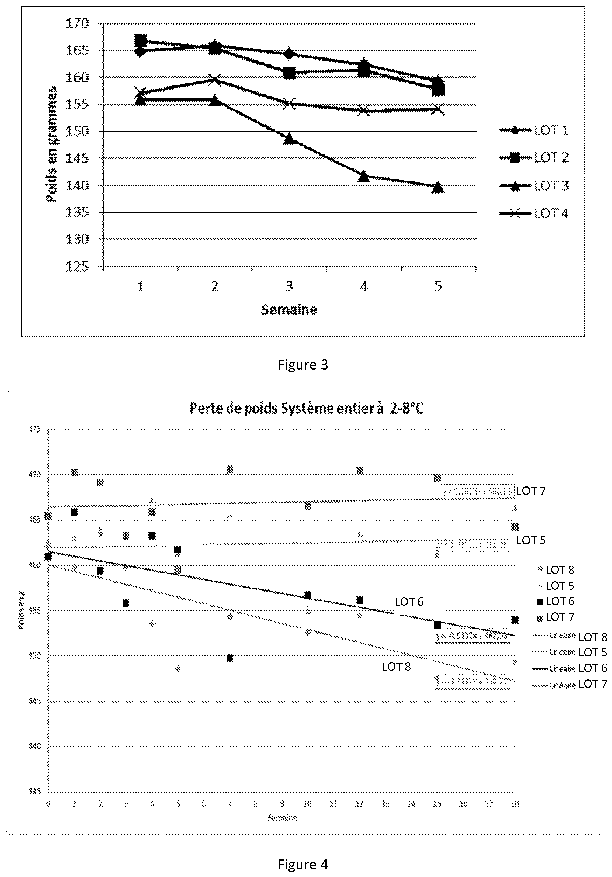

La figure 3 présente les mesures des poids des piles complètes de boites semaine par semaine pour les lots 1 à 4. Les piles des lots présentées sur cette figure sont stockées à une température comprise entre 30 et 35°C

Les résultats sur la cinétique de perte de poids de la gélose ont été obtenus en maintenant un niveau de condensation acceptable à l'intérieur des sachets utilisant le FILM A et FILM B dans les LOT 1 et LOT 2, contrairement aux sachets utilisant des films plastiques standard.

Les tableaux 2, 3 et 4 ainsi que les figures 1, 2 et 3 montrent ainsi une réduction de la cinétique de perte de poids de la gélose grâce à l'utilisation des films FILM A et FILM B dans les LOT 1 et LOT 2 en comparaison aux méthodes de référence illustrées par les lots LOT 3 et LOT 4. De plus, il est également démontré que l'utilisation des films FILM A et FILM B n'a pas d'incidence sur la perte de poids de la gélose en fonction de la position de la boite dans la pile. En effet, aucune variation significative de la cinétique de perte de poids de gélose n'est constatée entre la première et la dernière boite de la pile.

Il est également démontré une diminution de la cinétique de perte de poids de la gélose quelles que soient les conditions de stockage. L'influence de la température sur la cinétique de perte de poids gélose étant diminuée en comparaison avec les films utilisés pour la réalisation des sachets des lots LOT 3 et LOT 4. En effet, toutes conditions de stockage confondues, la perte de poids de la gélose est diminuée pour les lots utilisant des films FILMA et FILM B. Les piles de lots stockées à température ambiante dans des films FILMA et FILM B présentent notamment un poids en faible décroissance au fil des semaines en comparaison avec les LOT 3 et LOT 4. De même pour les piles de lots stockées à une température comprise entre 30 et 35°C dans des films FILMA et FILM B en comparaison avec le LOT 3.

Enfin il est également démontré une meilleure stabilité de la cinétique de perte de poids de la gélose quelles que soient les conditions de stockage, les mesures effectuées sur les lots LOT 3 et LOT 4 montrant une plus grande variation de la cinétique de perte de poids gélose dans le temps.

### Exemple 2:

Différents lots de boites de Petri sont constitués. Chacun des lots contient dix milieux de cultures gélosé de type boîte 90mm Lock Sure™, fabriqués par la demanderesse et commercialisés sous la référence bioMérieux n°43811 Trypcase Soy Agar 3P™.

Le cinquième lot, LOT 5, comprend trois piles de dix boites de Petri, chaque pile étant emballée dans un sachet formé à partir d'un film PET / PE appelé FILM D d'une épaisseur de 32µm et d'une perméabilité à la vapeur d'eau d'environ 18g/m²x24 hr. Ce film est composé d'une couche de Polyéthylène basse densité linaire transparente d'une épaisseur de 20 µm et d'une masse surfacique de 18,4 g/m² à +/- 12 %, d'une couche de colle (pleine face) de masse surfacique de 2,5 g/m² à +/- 0,6 g/m² et d'une couche de PET transparent d'une épaisseur de 12 µm et d'une masse surfacique de 16,8 g/m² à +/- 4 %. Le premier sachet ainsi formé est ensuite emballé dans deux sachets successifs formés à partir d'un film cellophane.

Le sixième lot, LOT 6, comprend trois piles de dix boites de Petri, chaque pile étant emballée dans un sachet formé à partir d'un film comprenant deux couches PET / PET appelé FILM E d'une épaisseur de 27µm et d'une perméabilité à la vapeur d'eau d'environ 25g/m²x24 hr. Ce film est composé d'une première couche de PET d'une masse surfacique de 17 g/m2 à +/- 7% et d'une épaisseur de 12µm, d'une couche de colle (pleine face) d'une masse surfacique de 3g/m2 et d'une seconde couche de PET d'une masse surfacique de 20 g/m2 à +/- 7% et d'une épaisseur de 15µm. Les différentes propriétés mécaniques du film ainsi formé sont données dans le tableau 6 ci-dessous :

**Tableau 6**

| Paramètre (en langue anglaise) | Méthode utilisée pour la mesure du paramètre | Unité | Valeur nominale | Tolérance |
|---|---|---|---|---|
| Cohérence entre couche (bond strength) | ASTM F-904 | N/15mm | 2.50 | Minimum :2 |
| Allongement à la rupture/direction transverse (break at elongation/td) | ASTM D-882 | % | 60 | Minimum :40 |
| Allongement à la rupture / direction machine (break at elongation/md) | ASTM D-882 | % | 90 | Minimum :70 |
| Résistance au scellage à chaud | ASTM F-88 | N/15mm 180° 0,5" 0,5Kg | 4 | Minimum :3 |
| Résistance à la rupture / direction machine (tensile strength/md) | ASTM D-882 | N/15mm | 60 | Minimum :40 |
| Résistance à la rupture / direction transverse (tensile strength/td) | ASTM D-882 | N/15mm | 70 | Minimum :50 |

Le premier sachet ainsi formé est ensuite emballé dans deux sachets successifs formés à partir d'un film cellophane.

Le septième lot, LOT 7, comprend trois piles de dix boites de Petri, chaque pile étant emballée dans un sachet formé à partir d'un film polypropylène orienté d'une épaisseur de 30µm et d'une perméabilité à la vapeur d'eau d'environ 5g/m²x24 hr, de référence FILM F. Le premier sachet ainsi formé est ensuite emballé dans deux sachets successifs formés à partir d'un film cellophane.

Le huitième lot, LOT 8, comprend trois piles de dix boites de Petri, chaque pile étant emballée dans un sachet formé à partir d'un film polyamide d'une épaisseur de 30 µm et d'une perméabilité à la vapeur d'eau comprise entre 50 et 80g/m²x24 hr, de référence FILM G issu de l'état de l'art. Le premier sachet ainsi formé est ensuite emballé dans deux sachets successifs formés à partir d'un film cellophane.

Le film de cellophane utilisé pour former les deuxième et troisième sachets n'a pas d'influence sur la perméabilité de l'ensemble formé par les trois sachets. En effet, sa perméabilité à la vapeur d'eau est d'environ 600g/m²x24 hr.

Chacune des trois piles des quatre lots ainsi formés subie alors une séquence de chocs thermiques selon le protocole suivant (tableau 7):

**Tableau 7**

| Température de stockage | Durée de stockage |
|---|---|
| 2-8°C | Environ 14h |
| 35-39°C | 8 heures |
| 2-8°C | Environ 14h |

A la suite de cette séquence de chocs thermiques, les piles sont stockées selon les conditions suivantes durant 18 semaines :
- Une première pile de chaque lot est stockée à une température comprise entre 2 et 8°C.
- Une seconde pile de chaque lot est stockée à température ambiante (TA).
- Un troisième pile de chaque lot est enfin stockée à une température comprise entre 30 et 35°C.

Un score d'exsudation dans chacun des sachets formant le premier emballage est observé selon les critères du tableau 8 suivant :

**Tableau 8 : Echelle d'exsudation des sachets :**

| Sachet | Score d'exsudation | description | Diamètre de gouttes | Quantités d'eau |
|---|---|---|---|---|
| Acceptable } | 0 - sec | Pas de condensation ni gouttelettes | 0 | 0 |
| | 1 - condensation | Sachet humide ou avec zone d'humidité, pas de gouttes séparées | < 1 mm | 1 - 100 mg |
| Hors gamme } | 2 - gouttelettes | Gouttelettes distinctes | 1 - 4 mm | 101 - 200 mg |
| | 3 - gouttes | Si au moins une gouttes fait 4 mm de diamètre | > 4 mm | 201 - 350 mg |
| | 4 - eau | Pas de gouttes séparées, flaque d'eau dans le sachet | Pas de séparation des gouttes | > 350 mg |

Ce score est déterminé à T0 soit à la suite de la séquence de chocs thermiques, ainsi qu'une fois par semaine les semaines 1, 2, 3, 4, 5, 7, 10, 12, 15 et 18. Le tableau 9 suivant synthétise le score de ces observations en fonction des conditions de stockage, chaque semaine pour chaque sachet.

**Tableau 9 : Scores d'exsudation des sachets des Films D, E, F, G**

| Semaine | 1 | 2 | 3 | 4 | 5 | 7 | 10 | 12 | 15 | 18 |
|---|---|---|---|---|---|---|---|---|---|---|
| **FILM G sachet T0** : **1** | | | | | | | | | | |
| 2-8°C | 0 | 0 | 1 | 1 | 1 | 0 | 1 | 0 | 1 | 1 |
| TA | 0 | 0 | 0 | 0 | 0 | 0 | 0 | 0 | 0 | 0 |
| 30-35°C | 0 | 0 | 0 | 0 | 0 | 0 | 0 | 1 | 1 | 1 |

| **FILM D Score sachet T0 : 3** | | | | | | | | | | |
|---|---|---|---|---|---|---|---|---|---|---|
| 2-8°C | 1 | 1 | 3* | 0 | 0 | 0 | 0 | 0 | 0 | 0 |
| TA | 0 | 0 | 0 | 0 | 0 | 0 | 0 | 0 | 0 | 0 |
| 30-35°C | 1 | 1 | 1 | 1 | 1 | 1 | 1 | 1 | 1 | 1 |

| **FILM E Score sachet T0 : 1** | | | | | | | | | | |
|---|---|---|---|---|---|---|---|---|---|---|
| 2-8°C | 0 | 0 | 0 | 0 | 0 | 0 | 1 | 0 | 0 | 0 |
| TA | 0 | 0 | 0 | 0 | 0 | 0 | 0 | 0 | 0 | 0 |
| 30-35°C | 1 | 1 | 1 | 1 | 1 | 1 | 1 | 1 | 1 | 1 |

| **FILM F Score sachet T0 : 4** | | | | | | | | | | |
|---|---|---|---|---|---|---|---|---|---|---|
| 2-8°C | 4 | 4 | 2 | 2 | 2 | 2 | 3 | 3 | 2 | 4 |
| TA | 4 | 4 | 3 | 2M | 0 | 0 | 0 | 0 | 0 | 0 |
| 30-35°C | 1 | 2 | 1 | 1 | 1 | 1 | 1 | 1 | 1 | 1 |

| | | | | | | | | | | |
|---|---|---|---|---|---|---|---|---|---|---|
| * Ce mauvais score est dû à la présence d'une déchirure du sachet avant ouverture. M : présence de gélose dans le sachet | | | | | | | | | | |

Il est ainsi démontré que les films D et E se comportent de façon optimale à 2-8°C et température ambiante (score acceptable de 0 voire 1) et de façon très correcte à température comprise entre 30-35°C. A contrario le film G dégrade de façon significative l'exsudation dans le sachet, aussi bien à 2-8°C qu'à température ambiante (scores non acceptables, hors gamme car supérieurs à 1, et ce durant plusieurs semaines). De plus il est constaté l'apparition d'un effet ventouse non souhaité entre le couvercle et la boîte..

Le poids de la première et de la dernière boite de chacune des piles de chaque lot est également mesuré les semaines 1, 2, 3, 4, 5, 7, 10, 12, 15 et 18 afin de déterminer la cinétique de perte de poids de la gélose en fonction des conditions de stockage et d'emballage. Le poids total de chaque pile de chaque lot est également mesuré toutes les semaines. Le suivi du poids de la gélose est un indicateur de la quantité d'eau perdue par la gélose.

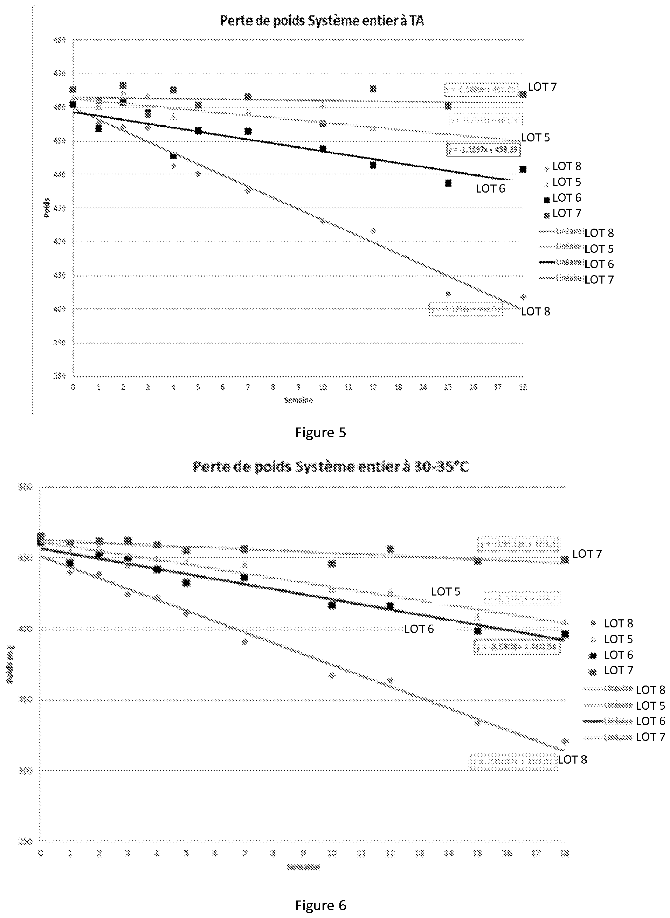

Les résultats de ces mesures des poids des piles de 10 boîtes (appelé «système entier») de chaque lot sont donnés figures 4, 5 et 6 suivant les conditions de stockage. Une courbe de régression linéaire obtenue à partir des mesures correspondantes à chaque lot est également tracée. La fonction affine ainsi obtenue permet de tracer la courbe correspondante avec x étant le nombre de jours de stockage et y étant le poids de la pile. Chaque courbe obtenue est présentée en correspondance avec chaque lot. Ces courbes permettent notamment d'estimer la cinétique de perte d'eau et d'envisager une durée maximale de péremption de la pile et des milieux contenus.

Ces résultats indiquent clairement une perte de poids de gélose limitée pour les films D et E en comparaison avec le film G de l'état de l'art. Ce contrôle de l'exsudation des milieux emballés permet ainsi d'envisager des durée de péremption bien supérieure à celle proposée par l'état de l'art, notamment des durées de 9 mois à un an suivant les conditions de stockage. La durée préconisée de conservation avec le film G étant à ce jour de 17 semaines.

Le film F est naturellement écarté car l'eau exsudé par le milieu de culture reste stockée dans le sachet et rend l'utilisation des milieux emballés impossible.

Ces résultats permettent ainsi d'envisager une réduction de la quantité de gélose pouvant être coulée dans une boite de Petri permettant néanmoins de garantir une durée de péremption semblable aux standards actuels. Inversement, des durées de conservation étendues peuvent être atteintes en utilisant des films selon l'invention en conservant une quantité de gélose coulée similaire. L'utilisation de film selon l'invention permet donc une réduction des coûts de fabrication et / ou un allongement de la durée de conservation des milieux de culture.

## Revendications

1. Utilisation d'un film polymère pour emballer au moins une boite de Pétri contenant un milieu de culture de microorganismes sous forme gélosée, ledit film comprenant au moins une couche thermoscellante, ***caractérisé* en ce que** ledit film :
- comprend au moins une couche de polyéthylène téréphtalate ;
- présente une perméabilité à la vapeur d'eau moyenne comprise entre 10,0 g/m²x24 heures et 80,0 g/m²x24 heures ; et
- ne présente pas de couche enduite et est obtenu directement par extrusion ou complexage.

2. Utilisation selon la revendication 1, dans laquelle le film comprend une seconde couche de Polyéthylène téréphtalate.

3. Utilisation selon les revendications 1 à 2, dans laquelle au moins une couche est microperforée.

4. Utilisation selon les revendications 1 à 3, dans laquelle le film présente une épaisseur comprise entre 20 et 80 µm, préférentiellement entre 30 et 50 µm.

5. Utilisation selon les revendications 1 à 4, dans laquelle la couche thermoscellante dudit film est du polyéthylène.

6. Utilisation d'un film polymère selon l'une quelconque des revendications 1 à 5 pour la réalisation d'un sachet destiné à l'emballage d'au moins un milieu de culture de microorganismes.

7. Procédé d'emballage d'au moins un milieu de culture, comprenant les étapes consistant à :
- placer le(s) milieu(x) de culture sur un film polymère comprenant au moins une couche thermoscellante, le ou les milieux étant placé(s) sur ladite couche thermoscellante ;
- recouvrir le(s) milieu(x) de culture avec une portion restée libre dudit film ou avec un autre film, de sorte que les couches thermoscellantes soient en regard l'une de l'autre,
- solidariser les bords du ou des deux films, de sorte que le(s) milieu(x) de culture soit emprisonné dans le sachet ainsi formé.
***caractérisé* en ce que** ledit film :
- comprend au moins une couche de polyéthylène téréphtalate ;
- présente une perméabilité à la vapeur d'eau moyenne comprise entre 10,0 g/m²x24 heures et 80,0 g/m²x24 heures ; et
- ne présente pas de couche enduite et est obtenu directement par extrusion ou complexage.

8. Procédé d'emballage selon la revendication précédente, dans lequel le ou les films sont préalablement stérilisée(s).

9. Procédé d'emballage selon la revendication précédente, dans lequel la méthode de stérilisation est une irradiation par rayonnements pris dans le groupe constitué par rayons gamma et/ou béta.

10. Procédé d'emballage selon l'une des revendications 7 à 9, dans lequel l'étape de solidarisation est une étape de thermoscellage à une température comprise entre 100 et 170 °C.

11. Procédé d'emballage selon l'une des revendications 7 à 10 comportant en outre les étapes additionnelles consistant à :
- placer le sachet ainsi obtenu à l'intérieur d'un deuxième sachet et
- sceller ledit deuxième sachet.

12. Procédé d'emballage selon la revendication précédente comportant en outre les étapes additionnelles consistant à :
- placer le deuxième sachet ainsi obtenu à l'intérieur d'un troisième sachet et
- sceller ledit troisième sachet.

13. Procédé d'emballage selon l'une des revendications 7 à 12, dans lequel lesdits deuxième et/ou troisième sachets sont constitués d'un matériau pris dans le groupe comprenant : la cellophane, les polyoléfines, les polyamides.

14. Procédé d'emballage selon l'une des revendications 7 à 13, dans lequel le film comprend une seconde couche de Polyéthylène téréphtalate.

15. Procédé d'emballage selon l'une des revendications 7 à 14, dans lequel au moins une couche est microperforée.

16. Procédé d'emballage selon l'une des revendications 7 à 15, dans lequel le film présente une épaisseur comprise entre 20 et 80 µm, préférentiellement entre 30 et 50 µm.

17. Procédé d'emballage selon l'une des revendications 7 à 16, dans lequel la couche thermoscellante dudit film est du polyéthylène.

## Patentansprüche

1. Verwendung einer Polymerfolie zum Verpacken mindestens einer Petrischale, die ein Mikroorganismen-Kulturmedium in gelierter Form enthält, wobei die Folie mindestens eine Heißsiegelschicht umfasst, **dadurch gekennzeichnet, dass** die Folie:
- mindestens eine Polyethylenterephthalat-Schicht umfasst,
- eine durchschnittliche Wasserdampfdurchlässigkeit zwischen 10,0 g/m² x 24 Stunden und 80,0 g/m² x 24 Stunden aufweist und
- keine aufgetragene Schicht aufweist und direkt durch Extrusion oder Kaschierung erhalten wird.

2. Verwendung nach Anspruch 1, wobei die Folie eine zweite Polyethylenterephthalat-Schicht umfasst.

3. Verwendung nach den Ansprüchen 1 bis 2, wobei mindestens eine Schicht mikroperforiert ist.

4. Verwendung nach den Ansprüchen 1 bis 3, wobei die Folie eine Dicke zwischen 20 und 80 µm, vorzugsweise zwischen 30 und 50 µm, aufweist.

5. Verwendung nach den Ansprüchen 1 bis 4, wobei die Heißsiegelschicht der Folie Polyethylen ist.

6. Verwendung einer Polymerfolie nach einem der Ansprüche 1 bis 5 zur Herstellung eines Beutels für die Verpackung mindestens eines Mikroorganismen-Kulturmediums.

7. Verfahren zur Verpackung mindestens eines Kulturmediums, das die folgenden Schritte umfasst:
- Platzieren des Kulturmediums bzw. der Kulturmedien auf eine Folie, die mindestens eine Heißsiegelschicht umfasst, wobei das Medium oder die Medien auf die Heißsiegelschicht platziert wird/werden,
- Bedecken des Kulturmediums bzw. der Kulturmedien mit einem frei gebliebenen Abschnitt der Folie oder mit einer anderen Folie, so dass die Heißsiegelschichten einander zugewandt sind, und
- fest Verbinden der Ränder der Folie oder der beiden Folien, so dass das Kulturmedium bzw. die Kulturmedien in dem so gebildeten Beutel eingeschlossen ist/sind,
**dadurch gekennzeichnet, dass** die Folie:
- mindestens eine Polyethylenterephthalat-Schicht umfasst,
- eine durchschnittliche Wasserdampfdurchlässigkeit zwischen 10,0 g/m² x 24 Stunden und 80,0 g/m² x 24 Stunden aufweist und
- keine aufgetragene Schicht aufweist und direkt durch Extrusion oder Kaschierung erhalten wird.

8. Verpackungsverfahren nach dem vorhergehenden Anspruch, wobei die Folie oder die Folien zuvor sterilisiert wird/werden.

9. Verpackungsverfahren nach dem vorhergehenden Anspruch, wobei es sich bei dem Sterilisierungsverfahren um eine Bestrahlung durch Strahlen, ausgewählt aus der Gruppe, bestehend aus gamma- und/oder beta-Strahlen, handelt.

10. Verpackungsverfahren nach einem der Ansprüche 7 bis 9, wobei der Verbindungsschritt ein Heißsiegelschritt bei einer Temperatur zwischen 100 und 170°C ist.

11. Verpackungsverfahren nach einem der Ansprüche 7 bis 10, das außerdem die folgenden zusätzlichen Schritte umfasst:
- Platzieren des so erhaltenen Beutels in einem zweiten Beutel und
- Versiegeln des zweiten Beutels.

12. Verpackungsverfahren nach dem vorhergehenden Anspruch, das außerdem die folgenden zusätzlichen Schritte umfasst:
- Platzieren des so erhaltenen zweiten Beutels in einem dritten Beutel und
- Versiegeln des dritten Beutels.

13. Verpackungsverfahren nach einem der Ansprüche 7 bis 12, wobei der zweite und/oder der dritte Beutel aus einem Material aus der Gruppe, umfassend: Zellophan, Polyolefine, Polyamide, hergestellt sind.

14. Verpackungsverfahren nach einem der Ansprüche 7 bis 13, wobei die Folie eine zweite Polyethylenterephthalat-Schicht umfasst.

15. Verpackungsverfahren nach einem der Ansprüche 7 bis 14, wobei mindestens eine Schicht mikroperforiert ist.

16. Verpackungsverfahren nach einem der Ansprüche 7 bis 15, wobei die Folie eine Dicke zwischen 20 und 80 µm, vorzugsweise zwischen 30 und 50 µm, aufweist.

17. Verpackungsverfahren nach einem der Ansprüche 7 bis 16, wobei die Heißsiegelschicht der Folie Polyethylen ist.

## Claims

1. Use of a polymer film for packaging at least one Petri dish containing a microorganism culture medium in agar form , said film comprising at least one heat-sealing layer, **characterized in that** said film:
- comprises at least one layer of polyethylene terephthalate,
- has an average water vapour permeability of between 10.0 g/m² x 24 hours and 80:0 g/m² x 24 hours, and
- does not have a coating layer and is obtained directly by extrusion or complexing.

2. Use according to Claim 1, wherein the film comprises a second layer of polyethylene terephthalate.

3. Use according to Claims 1 and 2, wherein at least one layer is microperforated.

4. Use according to Claims 1 to 3, wherein the film has a thickness of between 20 and 80 µm, preferentially between 30 and 50 µm.

5. Use according to claims 1 to 4, wherein the sealing layer of said film is polyethylene.

6. Use of a polymer film according to any one of Claims 1 to 8, for producing a sachet intended for the packaging of at least one microorganism culture medium.

7. Process for packaging at least one culture medium, comprising the steps consisting in:
- placing the culture medium or media on a polymer film comprising at least one heat-sealing layer, the culture medium or media being placed on said heat-sealing layer;
- covering the culture medium or media with a portion, which has remained free, of said film or with another film, such that the heat-sealing layers are facing one another,
- securing the edges of the film or of the two films, such that the culture medium or media is or are trapped in the sachet thus formed,
**characterized in that** said film:
- comprises at least one layer of polyethylene terephthalate,
- has an average water vapour permeability of between 10.0 g/m² x 24 hours and 80.0 g/m² x 24 hours, and
- does not have a coating layer and is obtained directly by extrusion or complexing.

8. Packaging process according to the preceding claim, wherein the film(s) is (are) presterilized.

9. Packaging process according to the preceding claim, wherein the sterilization method is irradiation with radiation taken from the group consisting of gamma-rays and/or beta-rays.

10. Packaging process according to one of Claims 7 to 9, wherein the securing step is a heat-sealing step at a temperature of between 100 and 170°C.

11. Packaging process according to one of Claims 7 to 10, also comprising the additional steps consisting in:
- placing the sachet thus obtained inside a second sachet and
- sealing said second sachet.

12. Packaging process according to the preceding claim, also comprising the additional steps consisting in:
- placing the second sachet thus obtained inside a third sachet and
- sealing said third sachet.

13. Packaging process according to one of Claims 7 to 12, wherein said second and/or third sachets consist of a material taken from the group comprising: cellophane, polyolefins and polyamides.

14. Packaging process according to any one of claim 7 to 13, wherein the film comprises a second polyethylene terephthalate layer/

15. Packaging process according to any one of claim 7 to 14, wherein at least one layer is microperforated.

16. Packaging process according to any one of claim 7 to 15, wherein the film has a thickness of between 20 and 80 µm, preferentially between 30 and 50 µm.

17. Packaging process according to any one of claim 7 to 16, wherein the sealing layer of said film is polyethylene.
